# EUROPEAN PATENT APPLICATION

(11) **EP 4 550 919 A1**
(43) Date of publication of application: **07.05.2025**
(21) Application number: 23843354.4
(22) Date of filing: 19.07.2023
(51) Int. Cl.: H04W 72/23, H04W 72/04, H04W 8/24, H04B 7/06, H04L 5/00

(54) **METHOD AND APPARATUS FOR APPLYING MAC CE THAT ACTIVATES SRS WHEN APPLYING UNIFIED BEAM TECHNIQUE IN WIRELESS COMMUNICATION SYSTEM**

(30) Priority: 19.07.2022 KR 20220089103
(71) Applicant: Samsung Electronics Co., Ltd., Suwon-si, Gyeonggi-do 16677 (KR)
(72) Inventor: JIN, Seungri, Suwon-si Gyeonggi-do 16677 (KR)
(74) Representative: Gulde & Partner
(86) International application number: PCT/KR2023/010369
(87) International publication number: WO 2024/019508

(57) **Abstract**

The present disclosure relates to a 5G or 6G communication system for supporting a higher data transmission rate. A method performed by user equipment in a wireless communication system may comprise receiving, from a base station, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; receiving, from the base station, a medium access control (MAC) control element (CE) which includes a one-bit indicator and is for indicating the TCI state of the SRS; in case that a value of the indicator is a first value, transmitting the SRS to the base station based on the MAC CE indicating the ID of the serving cell and the ID of the BWP included in the configuration information; and in case that the value of the indicator is a second value, transmitting the SRS to the base station based on the configuration information.

## Description

### [Technical Field]

The disclosure relates to a wireless communication system and more specifically, to a method and an apparatus for applying a medium access control (MAC) control element (CE) that activates a sound reference signal (SRS) when applying a unified beam technique in a wireless communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of wireless communication systems as described above, there is a need for ways to smoothly provide various services. Particularly, in connection with this, there is a need for ways to efficiently control beam failure detection for communication.

### [Disclosure of Invention]

### [Technical Problem]

The disclosure relates to a method for indicating a beam regarding an SRS resource in case that a unified transmission configuration indication (TCI) framework is used in a wireless communication system that uses a beam, particularly in multiple transmission reception points (TRPs).

Particularly, the disclosure proposes a method for clarifying a bandwidth part (BWP) and a serving cell associated when indicating a beam (TCI state) regarding an SRS resource through a MAC control element (CE).

### [Solution to Problem]

According to an embodiment, a method performed by a terminal in a wireless communication system may include receiving, from a base station, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; receiving, from the base station, a medium access control (MAC) control element (CE) for indicating a TCI state of the SRS, the MAC CE including a one-bit indicator; in case that a value of the indicator is a first value, transmitting the SRS to the base station, based on the MAC CE indicating the ID of the serving cell and the ID of the BWP comprised in the configuration information; and in case that the value of the indicator is a second value, transmitting the SRS to the base station, based on the configuration information.

According to an embodiment, a terminal in a wireless communication system may include a transceiver and a controller coupled with the transceiver. The controller may be configured to receive, from a base station, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; receive, from the base station, a medium access control (MAC) control element (CE) for indicating a TCI state of the SRS, the MAC CE including a one-bit indicator; in case that a value of the indicator is a first value, transmit the SRS to the base station, based on the MAC CE indicating the ID of the serving cell and the ID of the BWP comprised in the configuration information; and in case that the value of the indicator is a second value, transmit the SRS to the base station, based on the configuration information.

According to an embodiment, a method performed by a base station in a wireless communication system may include transmitting, to a terminal, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; transmitting, to the terminal, a medium access control (MAC) control element (CE) for indicating a TCI state of the SRS, the MAC CE including a bit indicator; in case that a value of the indicator is a first value, receiving the SRS from the terminal, based on the MAC CE indicating the ID of the serving cell and the ID of the BWP comprised in the configuration information; and in case that the value of the indicator is a second value, receiving the SRS from the terminal, based on the configuration information.

According to an embodiment, a base station in a wireless communication system may include a transceiver and a controller coupled with the transceiver. The controller may be configured to transmit, to a terminal, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; transmit, to the terminal, a medium access control (MAC) control element (CE) for indicating a TCI state of the SRS, the MAC CE including a bit indicator; in case that a value of the indicator is a first value, receive the SRS from the terminal, based on the MAC CE indicating the ID of the serving cell and the ID of the BWP comprised in the configuration information; and in case that the value of the indicator is a second value, receive the SRS from the terminal, based on the configuration information.

### [Advantageous Effects of Invention]

According to an embodiment of the disclosure, in case that a unified TCI framework is used in multiple TRPs in a wireless communication system, a beam indication regarding an SRS resource may be clarified through a radio resource control connection (RRC) configuration and a MAC CE such that, during SRS transmission, a UE can transmit the same by using an associated beam.

### [Brief Description of Drawings]

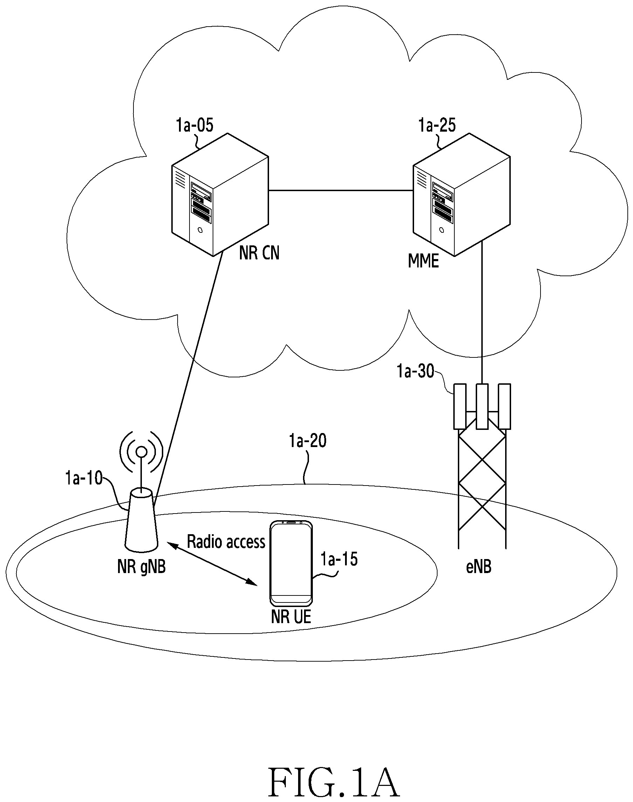

FIG. 1A illustrates a structure of a wireless communication system according to an embodiment of the disclosure.

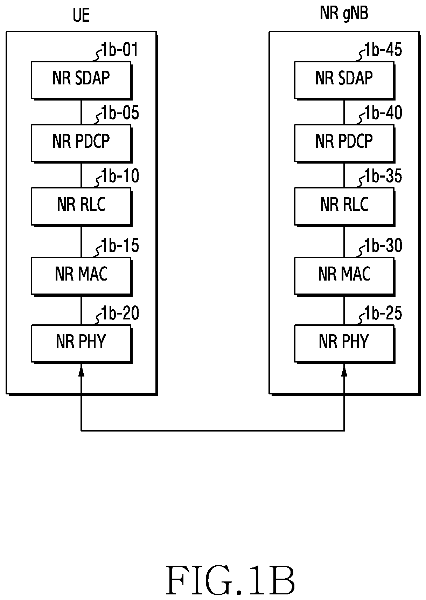

FIG. 1B illustrates a radio protocol structure of a wireless communication system according to an embodiment of the disclosure.

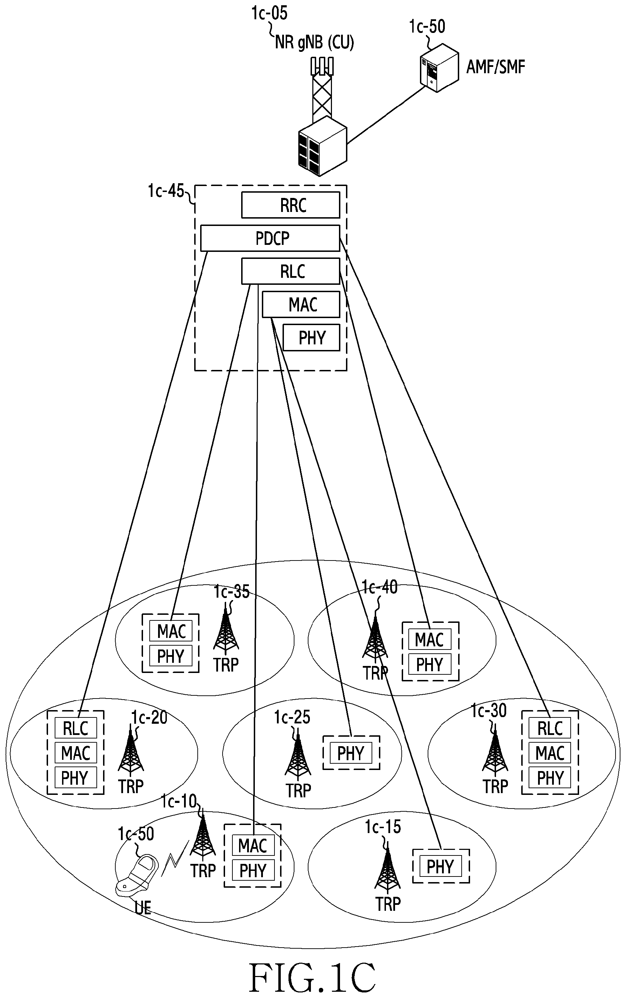

FIG. 1C illustrates the structure of a wireless communication system according to an embodiment of the disclosure.

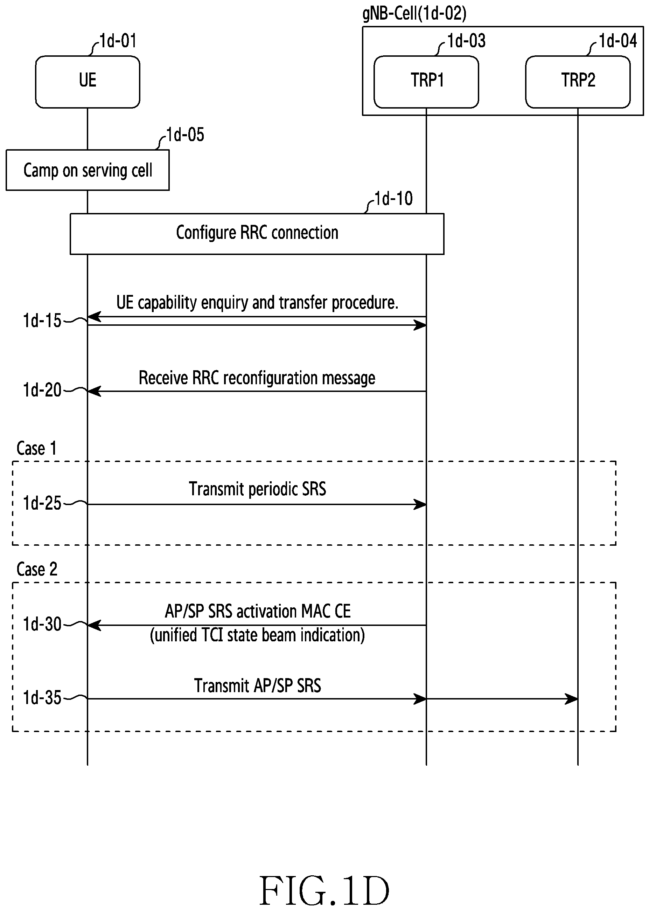

FIG. 1D illustrates a procedure in which SRS transmission is configured and activated in case that a unified TCI framework is configured in an NR system having multiple TRPs applied thereto according to an embodiment of the disclosure.

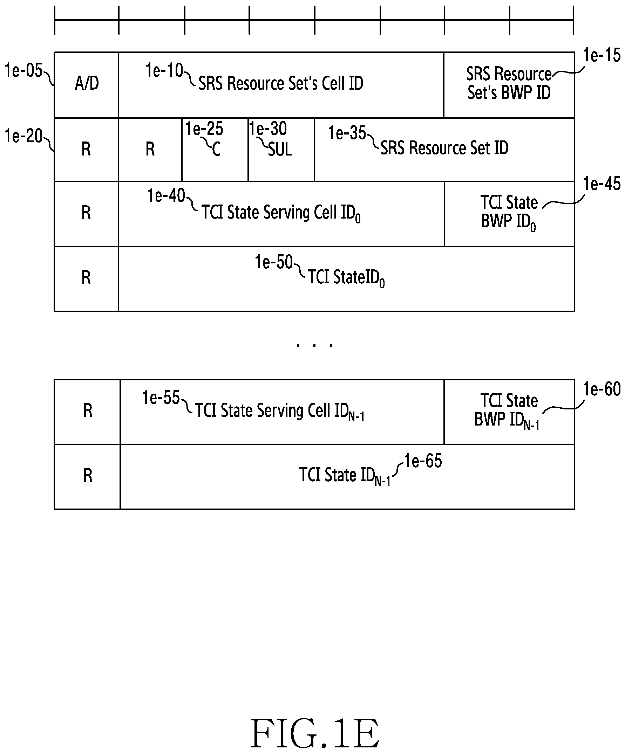

FIG. 1E illustrates a MAC CE structure in which an SP/AP SRS is activated by applying a unified TCI state according to an embodiment of the disclosure.

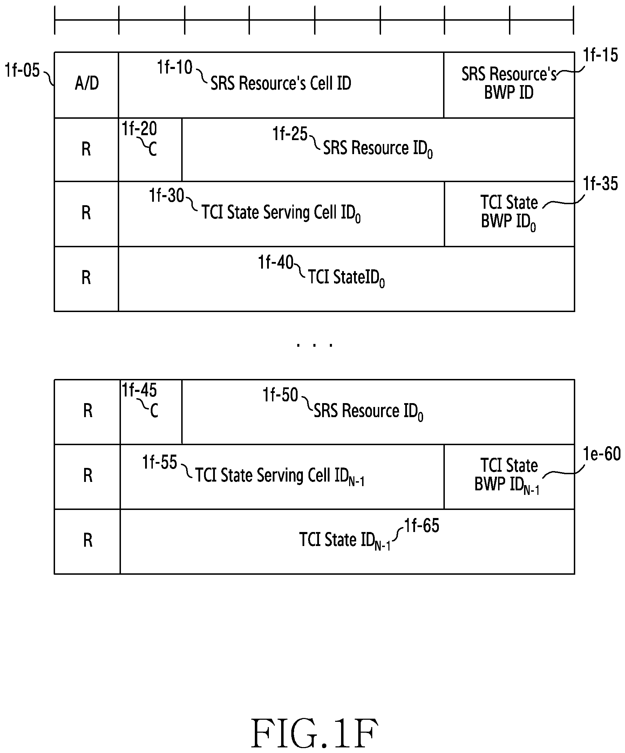

FIG. 1F illustrates a MAC CE structure in which a unified TCI state is applied to update a TCI state for all SRS transmissions in the same group as an indicated SRS resource, according to an embodiment of the disclosure.

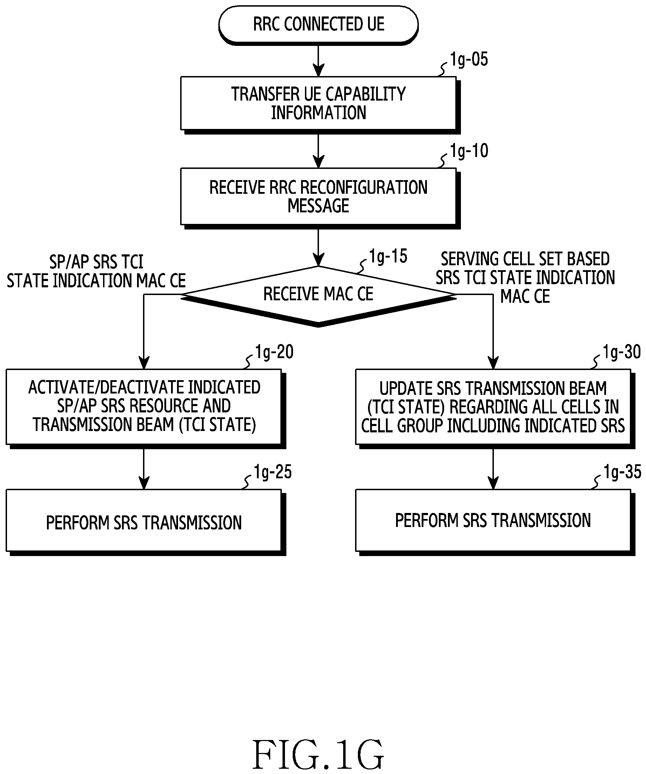

FIG. 1G illustrate UE operations regarding a method for SRS transmission and beam update, to which a unified TCI state is applied, according to an embodiment of the disclosure.

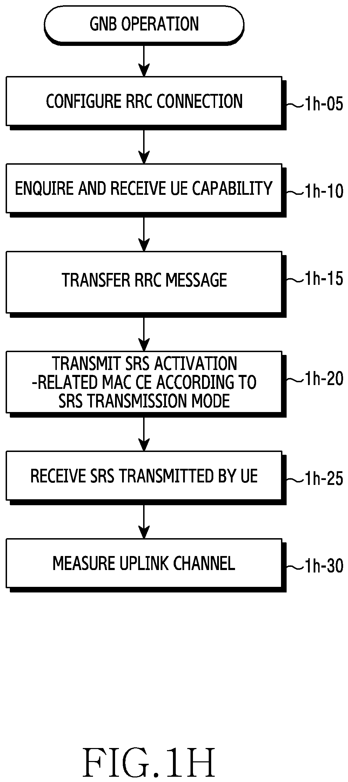

FIG. 1H illustrates entire operations of a gNB according to an embodiment of the disclosure.

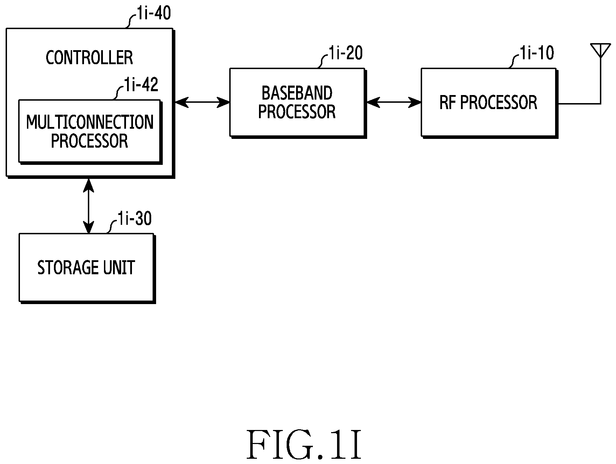

FIG. 1I is a block diagram illustrating the internal structure of a UE according to an embodiment of the disclosure.

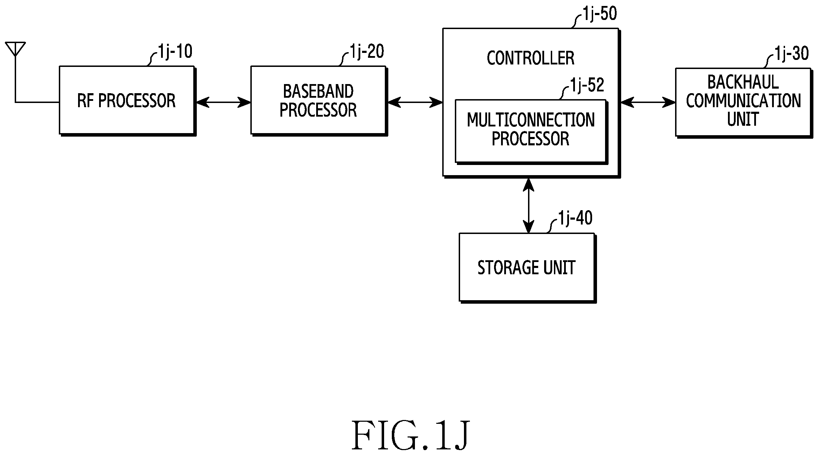

FIG. 1J is a block diagram illustrating the configuration of an NR gNB according to an embodiment of the disclosure.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. In the following description, terms for identifying access nodes, terms referring to network entities, terms referring to messages, terms referring to interfaces between network entities, and/or terms referring to various identification information are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards.

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. Throughout the specification, the same or like reference signs indicate the same or like elements.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure. The disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description, terms for identifying access nodes, terms referring to network entities, terms referring to messages, terms referring to interfaces between network entities, and/or terms referring to various identification information are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards.

In the following description, a base station (BS) is an entity that allocates resources to terminals, and may be at least one of a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB". A terminal may include a user equipment (UE), a mobile station (MS), a cellular phone, a smartphone, a computer, or a multimedia system capable of performing a communication function. Obviously, the example given above is not limiting.

The disclosure may be applied to 3GPP NR (5th generation wireless communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. Furthermore, the term "terminal" may refer to not only a mobile phone, an MTC device, an NB-IoT device, and a sensor, but also other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink may refer to a radio link via which a user equipment (UE) or a mobile station (MS) transmits data or control signals to a base station (BS) or eNode B. The downlink may refer to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

According to an embodiment of the disclosure, a method performed by a UE in a wireless communication system may include an operation of transmitting the UE's capability information to a gNB, an operation of receiving a radio resource control (RRC) message including a unified TCI-related configuration from the gNB, an operation of receiving a MAC CE from the gNB, and an operation of transmitting a sound reference signal (SRS), based on the unified TCI-related configuration and the received MAC CE.

FIG. 1A illustrates a structure of a wireless communication system according to an embodiment of the disclosure.

Referring to FIG. 1A, a radio access network of a wireless communication system according to an embodiment may be configured by a next-generation base station (new radio node B, hereinafter NR NB) 1a-10, and a new radio core network (NR CN) or next generation core network (NG CN) 1a-05. Of course, a structure of the radio access network is not limited to the above example. As used herein, the expression "may be configured by" may be replaced with the expression "may include". For example, a radio access network of a wireless communication system may include an NR NB 1a-10 and an NR CN 1a-05.

According to an embodiment, a user terminal (new radio user equipment, hereinafter NR UE or NR terminal) 1a-15 may access an external network via the NR NB 1a-10 and the NR CN 1a-05.

In FIG. 1A, the NR NB 1a-10 (or gNB or next generation node B) may correspond to an evolved node B (eNB) of a conventional LTE system. The NR NB 1a-10 is connected to the NR UE 1a-15 through a radio channel and may provide outstanding services as compared to a conventional node B (e.g., LTE base station). In the wireless communication system, since all user traffic is serviced through a shared channel, a device that collects state information, such as buffer statuses, available transmit power states, and channel states of UEs, and performs scheduling accordingly is required, and the NR NB 1a-10 may serve as the device. In general, one NR NB may control multiple cells. In order to implement ultrahigh-speed data transfer beyond the current LTE, the wireless communication system may have a wider bandwidth than the existing maximum bandwidth, may employ an orthogonal frequency division multiplexing (hereinafter referred to as OFDM) as a radio access technology, and may additionally integrate a beamforming technology therewith.

According to an embodiment of the disclosure, the wireless communication system may employ an adaptive modulation & coding (hereinafter referred to as AMC) scheme for determining a modulation scheme and a channel coding rate according to a channel state of a UE. For example, the NR CN 1a-05 performs functions such as mobility support, bearer configuration, and QoS configuration. The NR CN may be a device responsible for various control functions as well as a mobility management function for a UE, and may be connected to multiple base stations. In addition, the wireless communication system may interwork with the existing LTE system, and the NR CN may be connected to an MME 1a-25 via a network interface. The MME may be connected to an eNB 1a-30 that is an existing base station.

FIG. 1B illustrates a radio protocol structure of a wireless communication system according to an embodiment of the disclosure.

Referring to FIG. 1B, a radio protocol of a wireless communication system may include an NR service data adaptation protocol (SDAP) 1b-01 or 1b-45, an NR packet data convergence protocol (PDCP) 1b-05 or 1b-40, an NR radio link control (RLC) 1b-10 or 1b-35, and an NR medium access controls (MAC) 1b-15 or 1b-30 on each of UE and NR base station sides.

The main functions of the NR SDAP 1b-01 or 1b-45 may include at least some of functions below.
- Transfer of user plane data
- Mapping between a QoS flow and a data radio bearer (DRB) for both downlink (DL) and uplink (UL)
- Marking QoS flow ID in both downlink (DL) and uplink (UL) packets
- Reflective QoS flow to DRB mapping for the UL SDAP PDUs

According to an embodiment, with regard to the SDAP layer device, whether to use the header of the SDAP layer device or whether to use functions of the SDAP layer device may be configured for the UE through an RRC message according to PDCP layer devices or according to bearers or according to logical channels. In case that an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

According to an embodiment, the main functions of the NR PDCP 1b-05 or 1b-40 may include at least some of functions below.
- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device may refer to a function of reordering PDCP PDU received from a lower layer in an order based on PDCP sequence numbers (SNs). The reordering of the NR PDCP device may include a function of transferring data to an upper layer in the reordered sequence. As another example, the reordering of the NR PDCP device may include a function of transferring data directly to an upper layer without considering the order. As yet another example, the reordering of the NR PDCP device may include a function of recording PDCP PDUs lost as a result of reordering, may include a function of reporting the state of the lost PDCP PDUs to the transmitting side, and may include a function of requesting retransmission of the lost PDCP PDUs.

According to an embodiment of the disclosure, the main functions of the NR RLC 1b-10 or 1b-35 may include at least some of functions below.
- Transfer of upper layer PDUs
- In-sequence delivery of upper layer PDUs
- Out-of-sequence delivery of upper layer PDUs
- Automatic repeat request (ARQ) (Error correction through HARQ)
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of successively delivering RLC SDUs received from the lower layer to the upper layer. For example, the in-sequence delivery of the NR RLC device may include a function of, when multiple RLC SDUs split from one RLC SDU have been received, reassembling the received RLC SDUs and transferring the same, and may include a function of rearranging the received RLC SDUs based on the RLC sequence number (SN) or PDCP sequence number (SN). As another example, the in-sequence delivery of the NR RLC device may include a function of recording RLC PDUs lost as a result of reordering, may include a function of reporting the state of the lost RLC PDUs to the transmitting side, and may include a function of requesting retransmission of the lost RLC PDUs. As yet another example, the in-sequence delivery of the NR RLC device may include a function of, in case that there is a lost RLC SDU, sequentially delivering only RLC SDUs before the lost RLC SDU to the upper layer. The in-sequence delivery of the NR RLC device may include a function of, in case that a predetermined timer has expired although there is a lost RLC SDU, sequentially delivering all RLC SDUs received before the timer was started to the upper layer, or may include a function of, in case that a predetermined timer has expired although there is a lost RLC SDU, sequentially delivering all RLC SDUs received up to present to the upper layer. For example, the NR RLC device may process RLC PDUs in the received order (regardless of the sequence number order, in the order of arrival) and deliver same to the PDCP device regardless of the order (out-of-sequence delivery), and may, in the case of segments, receive segments which are stored in a buffer or which are to be received later, reconfiguring same into one complete RLC PDU, process, and deliver same to the PDCP device. The NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs received from the lower layer to the upper layer regardless of the order. For example, the out-sequence delivery of the NR RLC device may include a function of, in case that one original RLC SDU is segmented into multiple RLC SDUs and the segmented RLC SDUs are received, reassembling the RLC SDUs and delivering the reassembled RLC SDUs. The out-of-sequence delivery function of the NR RLC device may include a function of storing RLC SNs or PDCP SNs of received RLC PDUs and arranging the order to record lost RLC PDUs.

According to an embodiment, the NR MAC 1b-15 or 1b-30 may be connected to multiple NR RLC layer devices configured in one UE, and the main functions of the NR MAC may include at least some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- Multimedia broadcast and multicast service (MBMS) service identification
- Transport format selection
- Padding

An NR PHY layer 1b-20 or 1b-25 may perform operations of channel-coding and modulating upper layer data, thereby obtaining OFDM symbols, and delivering the same through a radio channel. The NR PHY layer 1b-20 or 1b-25 may perform operations of demodulating OFDM symbols received through the radio channel, channel-decoding the same, and delivering the same to the upper layer.

FIG. 1C illustrates the structure of a wireless communication system according to an embodiment of the disclosure.

Referring to FIG. 1C, the cell serviced by an NR gNB 1c-05 configured to operate based on a beam according to an embodiment may be configured by multiple transmission reception points (TRPs) 1c-10, 1c-15, 1c-20, 1c-25, 1c-30, 1c-35, and 1c-40. In the disclosure, the expression "may be configured by" may be used interchangeably with "may include". For example, the cell serviced by an NR gNB 1c-05 configured to operate based on a beam may include multiple TRPs 1c-10, 1c-15, 1c-20, 1c-25, 1c-30, 1c-35, and 1c-40.

According to an embodiment of the disclosure, the TRPs 1c-10 to 1c-40 represent a block obtained by separating some functions for transmitting and/or receiving physical signals from an existing NR eNB, and may include multiple antennas. The NR gNB 1c-05 may also be referred to as a central unit (CU), and the TRPs may also be referred to as distributed units (DUs). Functions of the NR gNB 1c-05 and TRPs may be configured by separating respective layers from PDCP/RLC/MAC/PHY layers such as 1c-45. For example, TRPs 1c-15 and 1c-25 may have only the PHY layer and perform functions of the PHY layer. For example, TRPs 1c-10, 1c-35, and 1c-40 may have only the PHY layer and the MAC layer and perform functions of the PHY layer and the MAC layer. For example, TRPs 1c-20 and 1c-30 may have only the PHY layer, the MAC layer, and the RLC layer and perform functions of the PHY layer, the MAC layer, and the RLC layer.

According to an embodiment, the TRPs 1c-10 to 1c-40 may use a beamforming technology such that multiple transmission/reception antennas are used to produce narrow beams in various directions, thereby transmitting/receiving data. The UE 1c-50 may access the NR gNB 1c-05 and external networks through the TRPs 1c-10 to 1c-40. The NR gNB 1c-05 may aggregate and schedule state information such as UEs' buffer state, available transmission power state, and channel state in order to service users, thereby supporting connections between UEs and a core network (CN), particularly AMF/SMF 1c-50.

TRPs in the disclosure default structures 1c-15 and 1c-25 in which they have only the PHY layer and can perform functions of the PHY layer. However, the disclosure is not limited thereto.

According to an embodiment, improved MIMO operations in a wireless communication system may require a method for measuring and reporting multiple beams in frequency range 2 (FR2) which is transmitted by using a beam, in particular, a method for selecting an optimal beam and using the same for data transmission/reception, and/or a method for measuring a beam failure regarding a currently used beam and recovering the same.

Hereinafter, descriptions of the disclosure will be based on the above-described methods, and specific operations for indicating a beam to be used when an SRS resource is transmitted, with regard to uplink SRS transmission, will be proposed. Particularly, the disclosure proposes operations regarding a case in which a unified TCI framework is applied.

According to an embodiment, the unified TCI framework may be referred to as a framework wherein beam management operations which have previously been independently managed in the downlink and uplink according to Rel-16 are generalized such that the same can be simultaneously applied to all downlink and uplink channels (PDCCH/PDSCH/PUCCH/PUSCH). According to above-described Rel-16, TCI state configuration and activation operations are applied to downlink beam management, and spatial relation is associated with uplink beam management so as to indicate a beam regarding an uplink transmission resource.

According to an embodiment, the unified TCI framework introduced in Rel-17 is configured and operated in one of two modes (for example, joint UL and DL TCI state mode and separate UL/DL TCI state mode) in an RRC configuration. For example, the unified TCI framework may be configured and operated in a "joint UL and DL TCI state mode," and a joint TCI state (dl-OrJoint-TCIState) configured in a PDSCH-Config may be applied to both the uplink and downlink. For example, the unified TCI framework may be configured and operated in a "separate UL/DL TCI state mode," a joint TCI state (dl-OrJoint-TCIState) configured in a PDSCH-Config may be used as a downlink TCI state, and an uplink TCI state (ul-TCI-StateList) configured in an uplink BWP (BWP-UplinkDedicated) may be applied to the uplink. Thereafter, beams in uplink and downlink transmission are indicated through a beam indication in DCI and a unified TCI state activation/deactivation MAC CE for activating each beam.

However, a method for indicating a beam applied to transmission of an SRS resource with regard to various sounding reference signal (SRS) transmissions (for example, periodic transmission, semi-persistent transmission, and/or aperiodic transmission) supports a method in which a beam applied to transmission of an SRS resource is indicated so as to follow a unified TCI state, or a method in which a beam applied to transmission of an SRS resource is configured so as not to follow a unified TCI state, and a dynamically applied beam is changed. This is because a beam used for normal data transmission and/or reception and a beam used for SRS transmission may be configured differently.

For example, in the case of periodic SRS transmission, it may be necessary to statically configure a transmission beam regarding a unified TCI state through an RRC configuration. As another example, in the case of semi-persistent and aperiodic SRS transmissions, it may be necessary to support transmission beam activation regarding a unified TCI state through a MAC CE. The disclosure proposes a method for indicating a beam applied to transmission of an SRS resource with regard to various SRS transmissions (for example, periodic transmission, semi-persistent transmission, aperiodic transmission). Particularly, the disclosure proposes a specific operation for indicating a transmission beam regarding a unified TCI state.

FIG. 1D illustrates a procedure in which SRS transmission is configured and activated in case that a unified TCI framework is configured in an NR system having multiple TRPs applied thereto according to an embodiment of the disclosure.

Referring to FIG. 1D, a UE 1d-01 in an idle mode (RRC_IDLE) according to an embodiment may find an appropriate cell and camp on a gNB 1d-02 (for example, serving cell) in operation 1d-05.

According to an embodiment, the UE 1d-01 may access the gNB's Pcell 1d-02 (e.g., gNB-cell) due to the occurrence of data to be transmitted or other reasons during camping in operation 1d-10. The gNB 1d-02 may be configured by multiple TRPs 1d-03 and 1d-04. In the idle mode, the UE may not be connected to the network to save or minimize a power of the UE, and the idle state may be a state in which data cannot be transmitted. Data transmission may require a transition from the idle mode to a connected mode (RRC_CONNECTED). In addition, the expression "camping" may substantially mean that, while remaining in the cell, the UE is receiving a paging message in order to determine whether or not data is coming through the downlink. In case that the UE succeeds in the procedure of accessing the gNB 1d-02, the UE undergoes a state change or transition to a connected mode (RRC_CONNECTED), and the UE in the connected mode may be able to transmit and/or receive data with the gNB.

According to an embodiment, in the RRC_CONNECTED state, the gNB and the UE 1d-01 may perform a procedure of acquiring UE capability in operation 1d-15. For example, the gNB and the UE 1d-01 may perform a UE capability enquiry and transfer procedure. For example, the gNB may first transfer a UE capability enquiry message to the UE 1d-01, thereby performing a UE capability enquiry after filtering UE capabilities needed by the gNB. The UE 1d-01 may transfer, to the gNB, a UE capability information message including UE capability supported by the UE within the range of the gNB's enquiry.

According to an embodiment, in operation 1d-20, the gNB may transfer an RRC reconfiguration message including configuration information in the gNB to the UE 1d-01. In the RRC message, RRC configurations necessary for the UE may be provided or included. For example, in the RRC message, a TCI state configuration (for example, unified TCI state configuration) and/or an SRS transmission-related configuration (for example, SRS resource configuration) may be provided or included. In addition, serving cell set information (simultaneousSpatial-UpdatedList1, simultaneousSpatial-UpdatedList2) may be provided such that the same beam update regarding SRS transmission can be applied in the RRC configuration. In case that a unified TCI state-based beam update is indicated for to an SRS resource existing in a list including the serving cell set information (serving cell set based SRS TCI state indication MAC CE), the same beam update operation may be applied to SRS resources of all serving cells belonging to the list including the serving cell set information. In the SRS transmission configuration, a configuration regarding a periodic SRS transmission resource (for example, SRS transmission resources, transmission period, and/or offset and the like), a configuration regarding semi-persistent SRS transmission (for example, SRS transmission resources, transmission period, and/or offset and the like), and/or a configuration regarding aperiodic SRS transmission (for example, SRS transmission resources and the like) may be provided or included. For example, in the case of the periodic SRS transmission, if a configuration is provided by RRC, the UE may perform SRS transmission according to the configuration. In the case of the semi-persistent SRS transmission and the aperiodic SRS transmission, SRS resources which are actually activated may be indicated by a MAC CE among the configuration, and the UE may perform SRS transmission upon receiving a MAC CE.

According to an embodiment, in case 1 in which the UE is provided with configuration information regarding periodic SRS transmission in relation to an SRS transmission configuration of an RRC message in operation 1d-25, that is, the UE is provided with SRS transmission-related SRS resources, transmission period, and/or offset and the like, the UE may perform periodic SRS transmission according to the configuration. Particularly, in operation 1d-25, the operation may vary according to whether a unified TCI state is applied to SRS transmission for the SRS-ResourceSet.
- In case that periodic SRS transmission is configured to follow a unified TCI state:

In SRS-ResourceSet configuration, followUnifiedTCIstateSRS configuration may be enabled.

As a beam associated during SRS transmission using an SRS resource in an SRS resource set, a beam indicated in the unified TCI state may be used.
- In case that periodic SRS transmission is configured not to follow a unified TCI state:

In SRS-ResourceSet configuration, followUnifiedTCIstateSRS configuration may be disabled.

According to an embodiment, a TCI state applied when an SRS resource is used for periodic transmission with regard to each SRS resource may be indicated with reference to a unified TCI state. For example, in the case of srs-TCIState in SRS-Resource IE, followUnifiedTCIstateSRS may be applied in an SRS resource set to which an SRS resource belongs in connection with the corresponding field, or in case that no unified TCI state is configured in relation to a TCI state configuration regarding the UE, the corresponding field may not exist.

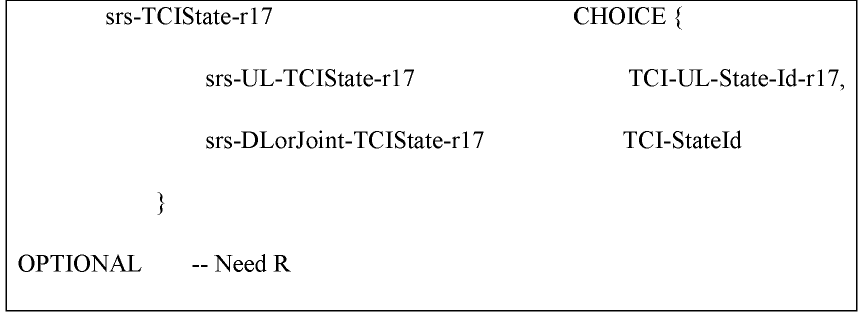

As a beam associated during SRS transmission using an SRS resource, a beam indicated by srs-TCIState is used. For example, a beam used during SRS transmission may be based on a beam indicated by srs-TCIState.

According to an embodiment, in case 2 in which configuration information regarding semi-persistent SRS transmission and aperiodic SRS transmission (hereinafter, referred to as SP/AP SRS transmission) is provided in relation to an SRS transmission configuration in the RRC message in operation 1d-20, the gNB may transfer an AP/SP SRS activation MAC CE (hereinafter, used interchangeably with "SP/AP SRS TCI state indication MAC CE") in operation 1d-30, thereby activating a specific SRS resource set. AP/SP SRS transmission can be activated through a unified TCI state in the following two methods:
- In case that SP/AP SRS transmission is configured to follow a unified TCI state:

In SRS-ResourceSet configuration, followUnifiedTCIstateSRS configuration may be enabled.

As a beam associated during SRS resource using an SRS resource in an SRS resource set, a beam indicated in the unified TCI state may be used.
- In case that SP/AP SRS transmission is configured not to follow a unified TCI state:

In SRS-ResourceSet configuration, followUnifiedTCIstateSRS configuration may be disabled.

According to an embodiment, a TCI state applied when an SRS resource is used for SP/AP SRS transmission with regard to each SRS resource set may be indicated with reference to a unified TCI state in a MAC CE. The process in which a TCI state is indicated with reference to a unified TCI state in a MAC CE will be described later in detail with reference to FIG. 1E and FIG. 1F.

According to an embodiment, as a beam associated during SP/AP SRS transmission using an SRS resource, a beam indicated in a MAC CE may be used.

The disclosure proposes a case in which SRS resources activated in a MAC CE are indicated through a unified TCI state (for example, a case in which SP/AP SRS transmission is configured not to follow a unified TCI state).

According to an embodiment, in operation 1d-35, the UE 1d-01 may perform SP/AP SRS transmission indicated through a MAC CE in operation 1d-30, and the unified TCI state beam indicated in the MAC CE may be applied to the SRS transmission resource.

FIG. 1E illustrates a MAC CE structure in which an SP/AP SRS is activated by applying a unified TCI state according to an embodiment of the disclosure.

Referring to FIG. 1E, the MAC CE according to an embodiment may also be referred to as an SP/AP SRS TCI state indication MAC CE. As described with reference to FIG. 1D, the SP/AP SRS TCI state indication MAC CE may be used for the purpose of indicating activation regarding a specific SRS resource set, in case that configuration information regarding semi-persistent SRS transmission and aperiodic SRS transmission has been provided by RRC, by transferring an AP/SP SRS activation MAC CE thereafter.

In the following, the structure of the SP/AP SRS TCI state indication MAC CE described with reference to FIG. 1E will be described.
- A/D field (1 bit) 1e-05: an indicator for indicating whether an SRS resource set indicted in the MAC CE is activated or deactivated
- serving cell ID of SRS resource set (5 bits) 1e-10: a serving cell identifier for which an SRS resource set indicated in the MAC CE is configured
- BWP ID of SRS resource set (2 bits) 1e-15: a BWP identifier of a serving cell for which an SRS resource set indicated in the MAC CE is configured
- R field (1 bit) 1e-20: reserved bit. Illustration of multiple reserved bits is omitted.
- C field (1 bit) 1e-25: an indicator for indicating whether or not an octet including TCI State serving cell ID field(s) and TCI state BWP ID field(s) exist in the MAC CE. If the bit is indicated as 0, an operation in which a MAC entity ignores TCI State serving cell ID field(s) and TCI state BWP ID field(s) is included. However, it is characteristically described in the disclosure that it is necessary to clearly indicate or describe which TCI state is used to transfer SP/AP SRS resources, and with which serving cell/BWP the transferred TCI state is associated. Detailed methods will be described below.
- SUL field (1 bit) 1e-30: an indicator for indicating whether or not an uplink of the cell is a SUL cell.
- SRS resource set ID field (4 bits) 1e-35: an SP/AP SRS resource set ID for indicating activation and deactivation in the MAC CE.
- TCI state serving cell ID (5 bits) 1e-40 and 1e-55: a serving cell ID for which the TCI state ID (described below) is configured.
- TCI state BWP cell ID (2 bits) 1e-45 and 1e-60: a BWP ID for which the TCI state ID (described below) is configured.
- TCI state ID (7 bits) 1e-50 and 1e-65: a beam (TCI state) indicator applied to SRS resource transmission included in an SRS resource set ID (a set of activated SRS resources) indicated in the MAC CE. The TCI state ID may indicate a unified TCI state.

The SP/AP SRS TCI state indication MAC CE described with reference to FIG. 1E has a new eLCID value, and may be distinguished through an eLCID determined in the MAC PDU sub-header. For example, upon receiving the MAC CE, the UE may identify that the received MAC CE is the SP/AP SRS TCI state indication MAC CE, based on the eLCID.

According to an embodiment, in consideration of the fact that the unified TCI state is indicated in relation to beam information (TCI state) applied to the SRS resource among MAC CE formant and constituent fields, the association between the C field 1e-25, the TCI state serving cell ID 1e-40 and 1e-55, the TCI state BWP ID 1e-45 and 1e-60, and the TCI state ID 1e-50 and 1e-65 may be described in more detail. For example, in case that the unified TCI state is used, information regarding the serving cell and the BWP by which a TCI state configuration is provided may already be associated with the unified TCI state ID in the RRC configuration. Therefore, it may be specified and clarified whether information regarding the serving cell and the BWP by which a TCI state configuration is provided during a TCI state ID indication needs to be provided in the MAC CE or, in case that no information regarding the serving cell and the BWP by which a TCI state configuration is provided is provided, how the same is to be processed.

FIG. 1F illustrates a MAC CE structure in which a unified TCI state is applied to update a TCI state for all SRS transmissions in the same group as an indicated SRS resource, according to an embodiment of the disclosure.

Referring to FIG. 1F, the MAC CE according to an embodiment may also be referred to as a serving cell set based SRS TCI state indication MAC CE.

As described with reference to FIG. 1D, in the serving cell set based SRS TCI state indication MAC CE, serving cell set information (simultaneousSpatial-UpdatedList1, simultaneousSpatial-UpdatedList2) to which the same beam update regarding SRS transmission may be applied in the RRC configuration may be provided together. In case that the serving cell set based SRS TCI state indication MAC CE in FIG. 1F indicates beam information (TCI state) to which a specific SRS resource and SRS transmission are applied, the same TCI state update may be applied to SRS resources in all serving cells within the serving cell set configured by RRC.

In the following, the structure of the serving cell set based SRS TCI state indication MAC CE described with reference to FIG. 1F will be described.
- R field (1 bit) 1f-05: reserved bit. Illustration of multiple reserved bits is omitted.
- serving cell ID of SRS resource (5 bits) 1f-10: a serving cell identifier for which an SRS resource set indicated in the MAC CE is configured
- BWP ID of SRS resource (2 bits) 1f-15: a BWP identifier of a serving cell for which an SRS resource set indicated in the MAC CE is configured
- C field (1 bit) 1f-20 and 1f-45: an indicator for indicating whether or not an octet including TCI State serving cell ID field(s) and TCI state BWP ID field(s) exist in the MAC CE. If the bit is indicated as 0, an operation in which a MAC entity ignores TCI State serving cell ID field(s) and TCI state BWP ID field(s) is included. However, it is characteristically described in the disclosure that it is necessary to clearly indicate or describe which TCI state is used to transfer an SRS resource in particular, and with which serving cell/BWP the TCI state is associated. Detailed methods will be described below.
- SRS resource ID (6 bits) 1f-25 and 1f-50: an SRS resource ID for indicating activation and deactivation in the MAC CE.
- TCI state serving cell ID (5 bits) 1f-30 and 1f-55: a serving cell ID for which the TCI state ID (described below) is configured.
- TCI state BWP cell ID (2 bits) 1f-35 and 1f-60: a BWP ID for which the TCI state ID (described below) is configured.
- TCI state ID (7 bits) 1f-40 and 1f-65: a beam (for example, TCI state) indicator applied to SRS resource transmission included in an SRS resource ID (a set of activated SRS resources) indicated in the MAC CE. The TCI state ID may indicate a unified TCI state.

The serving cell set based SRS TCI state indication MAC CE described with reference to FIG. 1F has a new eLCID value, and may be distinguished through an eLCID determined in the MAC PDU sub-header. In consideration of the fact that the unified TCI state is indicated in relation to beam information (TCI state) applied to the SRS resource among MAC CE formant and constituent fields, the association between the C field 1f-25, the TCI state serving cell ID 1f-30 and 1f-55, the TCI state BWP ID 1f-35 and 1f-60, and the TCI state ID 1f-40 and 1f-65 will be described in more detail.

According to an embodiment, in case that the unified TCI state is used, information regarding the serving cell and the BWP by which a TCI state configuration is provided may already be associated with the unified TCI state ID in the RRC configuration. Therefore, it may be specified and clarified whether information regarding the serving cell and the BWP by which a TCI state configuration is provided during a TCI state ID indication needs to be provided in the MAC CE or, in case that no information regarding the serving cell and the BWP by which a TCI state configuration is provided is provided, how the same is to be processed.

Although the disclosure is described based on the MAC CE structure described with reference to FIG. 1E and FIG. 1F, the following issues may be considered.
- Issue 1: there may be an issue regarding whether or not information (index) regarding the serving cell and the BWP associated with the unified TCI state indicated in the MAC CEs in FIG. 1E and FIG. 1F is necessary, and if information (index) regarding the serving cell and the BWP associated with the unified TCI state indicated in the MAC CEs is unnecessary, how the same is to be processed.
   Method 1: the existing MAC CE structure is maintained, and a clarification is added
   Method 2: the octet including information (index) regarding the serving cell and the BWP associated with the unified TCI state is removed from the current MAC CE format
- Issue 2: in case that the C field 1e-25, 1f-20, and 1f-45 is set to be 0 in the current MAC CE format, that is, in case that no information (index) regarding the serving cell and the BWP associated with the unified TCI state is provided, an explanation may be necessary regarding how the indicated TCI state is to be determined.

FIG. 1G illustrate UE operations regarding a method for SRS transmission and beam update, to which a unified TCI state is applied, according to an embodiment of the disclosure.

In FIG. 1G, respective solutions for issue 1 and issue 2 to be solved in the disclosure may be included.

Referring to FIG. 1G, a UE according to an embodiment (for example, UE 1d-01) may transfer UE capability to a gNB in operation 1g-05. For example, the gNB may first transfer a UE capability enquiry message to the UE, thereby performing a UE capability enquiry after filtering UE capabilities needed by the gNB. The UE may transfer a UE capability information message including UE capability supported by the UE within the range of the gNB's enquiry to the gNB. In the step in which the UE transfers the UE capability information message, the UE may report whether or not a unified TCI state framework is supported, and UE capability regarding a method for transmitting an SRS based on whether or not a unified TCI state framework is supported. The UE capability may be reported as at least one of UE-specific capability, frequency band-specific capability, or frequency band combination-specific capability.

According to an embodiment, in operation 1g-10, the UE may receive an RRC reconfiguration message including configuration information in the gNB from the gNB in a radio resource control (RRC) connected state. For example, the RRC message may include various pieces of configuration information necessary for data transmission and/or reception in the RRC connected state of the UE. For example, the RRC message may include a unified TCI state-related configuration and/or an SRS transmission-related configuration considered in the disclosure. In addition, in the RRC configuration, serving cell set information (simultaneousSpatial-UpdatedList1, simultaneousSpatial-UpdatedList2) to which the same beam update regarding SRS transmission may be applied may be provided together. Detailed configuration information is described with reference to FIG. 1D.

As described above with reference to FIG. 1D, in the configuration step, a configuration regarding periodic SRS/semi-persistent SRS/aperiodic SRS transmission may be provided in relation to the SRS transmission configuration. In addition, a unified TCI state may be configured in each serving cell and BWP with regard to a unified TCI state configuration in the following methods:
1. First unified TCI state configuration method: a method wherein, in a specific serving cell and a specific BWP, a unified TCI state applied to the serving cell and the BWP is directly configured
   - Uplink configuration: the following configuration is provided in a BWP-UplinkDedicated IE. A case in which explicitlist is selected and configured in a CHOICE structure 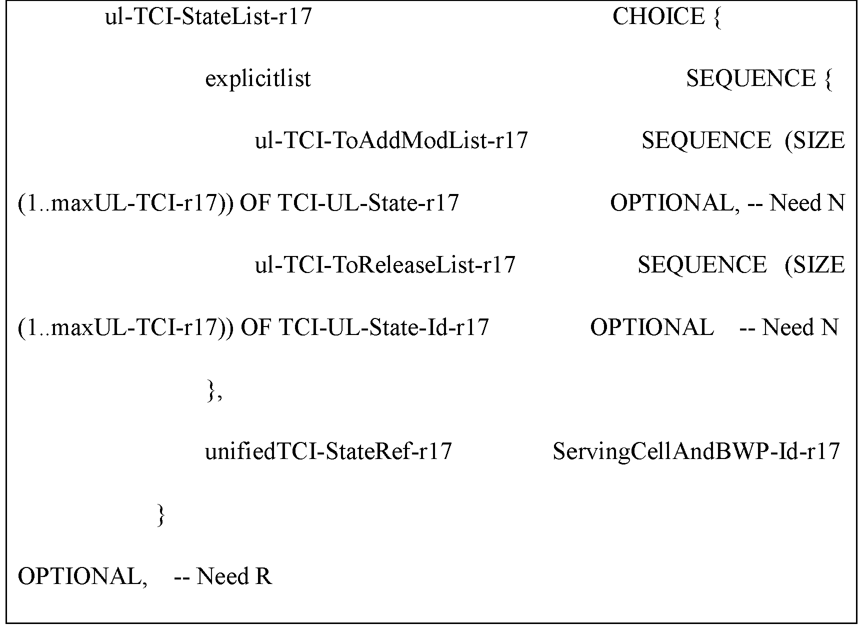
   - Downlink configuration: the following configuration is provided in a PDSCH-Config IE. A case in which explicitlist is selected and configured in a CHOICE structure 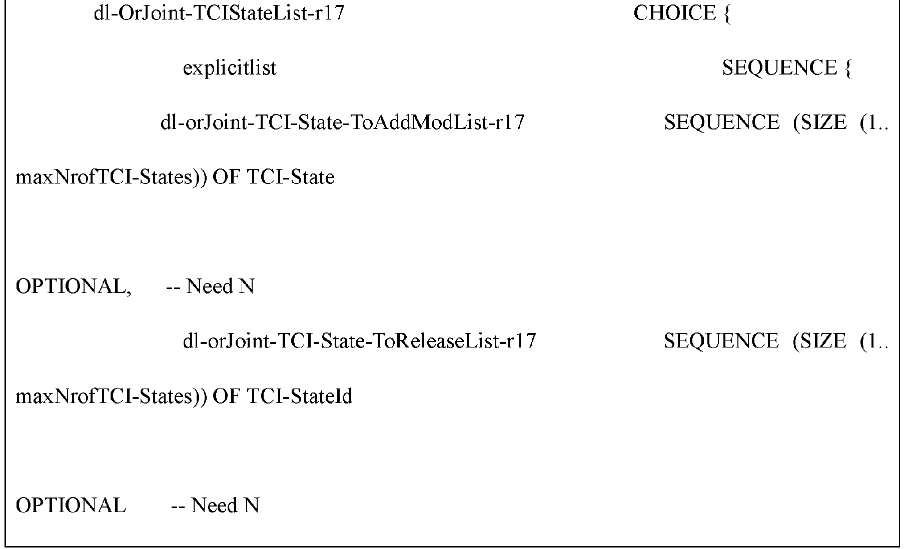 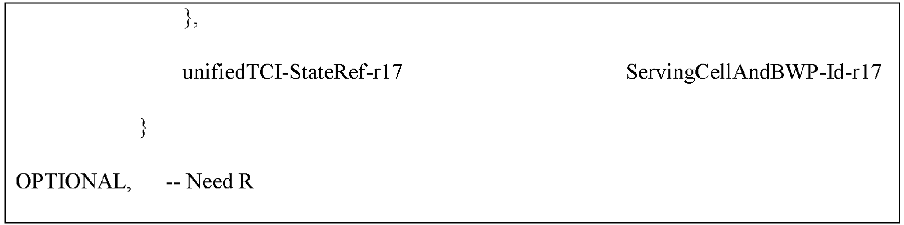
2. Second unified TCI state configuration method: reference information of a unified TCI state referenced by a serving cell and a BWP is provided (serving cell and BWP identifiers)
   - Uplink configuration: the following configuration is provided in a BWP-UplinkDedicated IE. A case in which unifiedTCI-StateRef-r17 is selected and configured in a CHOICE structure 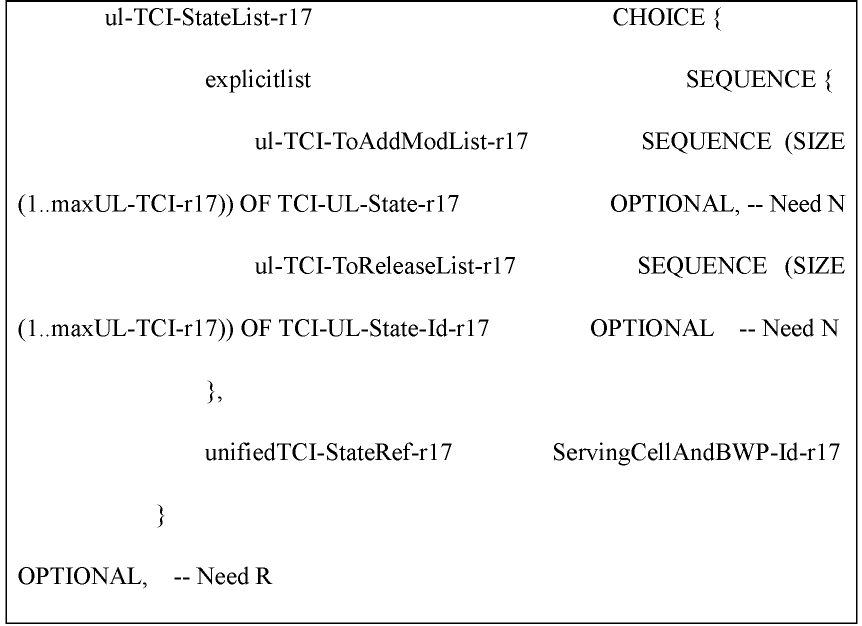
   - Downlink configuration: the following configuration is provided in a PDSCH-Config IE. A case in which unifiedTCI-StateRef-r17 is selected and configured in a CHOICE structure

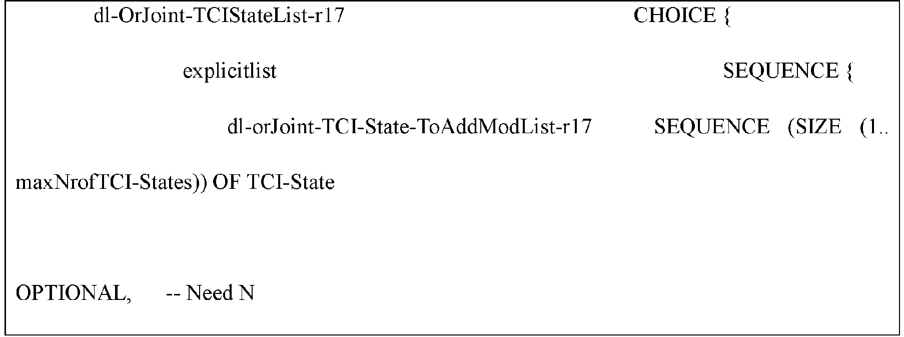

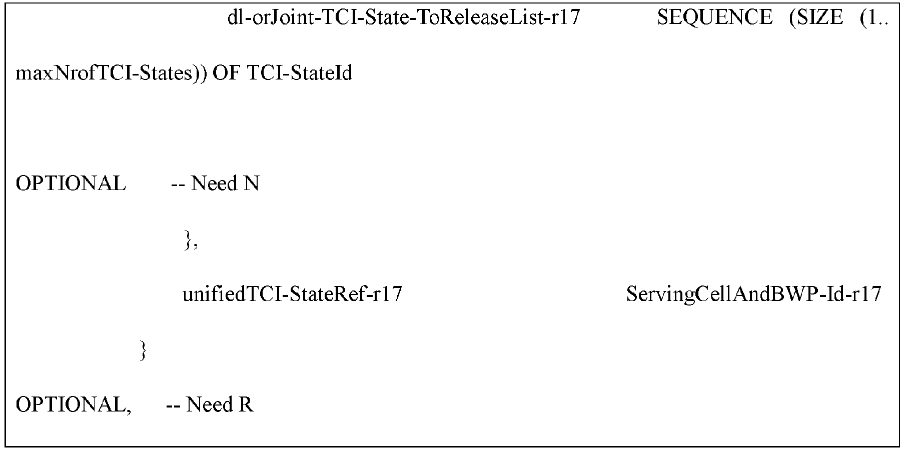

Information regarding a serving cell and a BWP indicated by a reference may be identified by the following IE:

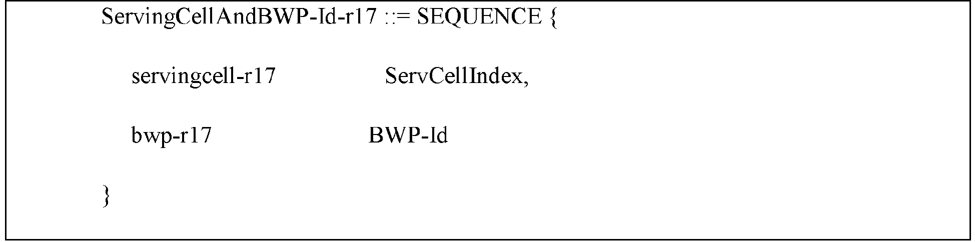

According to an embodiment, in case that the gNB configures a unified TCI state, it may be identified that the serving cell and the BWP, to which the unified TCI state is applied, is already provided with an association through an RRC configuration. In case that a TCI state ID is explicitly configured in the unified TCI state regarding the uplink and downlink, a TCI state configuration exists in the serving cell and BWP configurations, and information regarding the serving cell and the BWP, for which the TCI state is configured, may thus be identified. In case that a reference point is indicated, the serving cell and the BWP to which the unified TCI state is applied are explicitly indicated, and the used TCI state and information regarding the serving cell and the BWP, for which the TCI state is configured, may thus be identified.

That is, with regard to issue 1, in connection with indicating a TCI state associated with transmission of an SRS resource and an SRS resource belonging to an SRS resource set in the MAC CE in FIG. 1E and FIG. 1F, only the TCI state ID may be indicated, thereby providing an advantage in that information regarding the serving cell and the BWP, for which the TCI state is configured, is indicated together. That is, information regarding the serving cell and the BWP, for which the TCI state is configured, is not necessarily provided additionally. However, as described in connection with issue 1, all of the following methods may be applied, and specific UE operations regarding respective cases will be clarified in the following:
1. Solution 1 to issue 1: maintain the existing MAC CE structure, and add a clarification
   - In case that the C field is set to be 1, information regarding the serving cell and the BWP associated with the indicated TCI state ID may need to be configured to have consistency with the association provided in the RRC. That is, TCI state serving cell and BWP IDs signaled in the MAC CE may need to be transferred according to the RRC configuration.
   - In case that the C field is set to be 0, the following description may be added to the indicated TCI state ID according to the unified TCI state mode of the RRC configuration.
      a) Joint TCI state mode:
         - A joint TCI state is configured through PDSCH-Config in a DL active BWP or designated DL BWP, and a first unified TCI state configuration method or a second unified TCI state configuration method may be applied.
      b) Separate TCI state mode
         - A separate DL TCI state is configured through PDSCH-Config in a DL active BWP or designated DL BWP, and a first unified TCI state configuration method or a second unified TCI state configuration method may be applied.
         - A separate UL TCI state is configured through a BWP-UplinkDedicated IE in a UL active BWP or specific UL BWP, and a first unified TCI state configuration method or a second unified TCI state configuration method may be applied.
2. Solution 2 to issue 1: remove the octet including information (index) regarding the serving cell and the BWP associated with the unified TCI state from the current MAC CE format
   - In solution 2, the octet including information (index) regarding the serving cell and the BWP associated with the unified TCI state may be removed from the current MAC CE format, and the indicated TCI state ID may be applied to SRS transmission.
   - The following description may be added to the indicated TCI state ID according to the unified TCI state mode of the RRC configuration.
      a) Joint TCI state mode:
         - Ajoint TCI state is configured through PDSCH-Config in a DL active BWP or specific DL BWP, and a first unified TCI state configuration method or a second unified TCI state configuration method may be applied.
      b) Separate TCI state mode
         - A separate DL TCI state is configured through PDSCH-Config in a DL active BWP or specific DL BWP, and a first unified TCI state configuration method or a second unified TCI state configuration method may be applied.
         - A separate UL TCI state is configured through a BWP-UplinkDedicated IE in a UL active BWP or specific UL BWP, and a first unified TCI state configuration method or a second unified TCI state configuration method may be applied.

According to an embodiment, in operation 1g-10, the gNB may provide configuration information regarding periodic SRS transmission in an RRC configuration message, and the UE may instantly perform a periodic SRS transmission operation according to the given configuration.

According to an embodiment, in operation 1g-15, the UE may receive a MAC CE associated with SRS resource transmission from the gNB, and the UE may distinguish and then perform two kinds or operations according to the type of the MAC CE in the disclosure. That is, the UE may identify the LCID, more accurately eLCID, of the received MAC CE, thereby identifying or determining whether the MAC CE is an SP/AP SRS TCI state indication MAC CE or a serving cell set based SRS TCI state indication MAC CE, and may then perform a different operation.

According to an embodiment, in case that the MAC CE received in operation 1g-15 is an SP/AP SRS TCI state indication MAC CE, the UE may identify whether to activate or deactivate the SP/AP SRS resource indicated through the MAC CE in operation 1g-20. In case that activation is indicated as a result of identifying the same through the A/D field (in case that the A/D field is set to be 1), the UE may determine a beam according to TCI state information (for example, TCI state serving cell, BWP, and/or TCI state ID) applied to transmission of the indicated SRS resource, thereby transferring the SRS resource. The SRS resource may be aperiodic or semi-persistent transmission, and relevant configurations may be provided by RRC. That is, the UE may perform SRS transmission according to the setting in operation 1g-25.

According to an embodiment, in case that the MAC CE received in operation 1g-15 is a serving cell set based SRS TCI state indication MAC CE, the UE may perform beam update with regard to the SRS resource indicated through the MAC CE in operation 1g-30. For example, the UE may determine a beam according to TCI state information (for example, TCI state serving cell, BWP, and/or TCI state ID) applied to transmission of the SRS resource indicated in the MAC CE, and may simultaneously perform a beam change to the TCI state for all serving cells in the same serving cell set. Thereafter, in operation 1g-35, the UE may have SRS transmission indicated thereto and may directly perform transmission. The SRS resource transmission in operation 1g-35 may be an operation encompassing all of the above-described periodic transmission, aperiodic transmission, and/or semi-persistent SRS transmission. That is, periodic SRS transmission may be performed by instantly applying a beam update to the SRS configuration configured by RRC. Although aperiodic transmission or semi-persistent transmission are not illustrated in the drawings, SRS transmission may be performed through an additional MAC CE activation indication from the gNB.

According to an embodiment, the MAC CE may or may not include an octet including the ID of the serving cell and the BWP to which the TCI state is applied according to whether or not the MAC CE has a C field with regard to the two MAC CE-related operations. For example, the operation of identifying information of the serving cell and the BWP regarding the indicated TCI state regardless of whether there is a C field or not is described in detail in operation 1g-15, and the disclosure is characterized in that the application method described in operation 1g-15 is newly defined as a UE operation. In addition, the proposed method related to SRS transmission handled in the disclosure may be applied to all SRS transmissions used for codebook, non-codebook, and/or antenna switching.

Meanwhile, in case that the C field is set or configured to be 1, unlike the above-described embodiment, the MAC CE may include a serving cell ID different from the serving cell ID included in RRC configuration information, or the MAC CE may include a BWP ID different from the BWP ID included in RRC configuration information. For example, in case that the TCI state of a different serving cell and/or a different BWP other than the serving cell and the BWP of the RRC configuration which the gNB has provided to the UE in advance is to be indicated to the UE, the MAC CE may include a different serving cell ID and/or a different BWP ID.

For example, in case that the gNB has indicated serving cell ID=X and BWP ID=A to the UE as information for referencing the TCI state to be applied to an SRS through RRC configuration information, but the gNB thereafter wants to instruct the UE to apply the TCI state of serving cell ID=Y and BWP ID=B (or in case that the gNB wants to instruct the UE to apply the TCI state of serving cell ID=X and BWP ID=C), the gNB may set the C field of the MAC CE to be 1, and may indicate that the value of the serving cell ID field and the BWP ID field included in the MAC CE is {Y, B} (or {X, C}) differently from {X, A} indicated through the RRC configuration.

According to an embodiment, upon receiving a MAC CE, the C field of which is set to be 1, the UE may transmit an SRS by referencing and applying the TCI state of the serving cell ID (Y) and the BWP ID (B) (or serving cell ID (X) and the BWP ID (C)) indicated by the MAC CE, instead of the serving cell ID (X) and the BWP ID (A) configured by RRC. In other words, in case that the C field is set or configured to be 1, the UE may cause the serving cell ID and BWP ID included in the MAC CE to override the serving cell ID and BWP ID of the RRC configuration information.

According to an embodiment, in case that the C field is set to be 1, the BWP ID indicated by the gNB through the MAC CE may be one of a specific cell's default BWP's ID, a specific cell's first active BWP's ID, or a specific cell's lowest indexed BWP's ID, and may include all cases in which the same is not the BWP configured by RRC. In addition, in case that the C field is set to be 1, the serving cell ID indicated by the gNB through the MAC CE may be the ID of a PCell, the ID of a primary secondary cell group cell (PSCell), the ID of a special cell (SpCell), or the ID of a secondary cell (SCell), and may include all cases in which the same is not the serving cell configured by RRC.

According to an embodiment, a method performed by a terminal in a wireless communication system may include receiving, from a base station, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; receiving, from the base station, a medium access control (MAC) control element (CE) for indicating a TCI state of the SRS, the MAC CE including a one-bit indicator; in case that the value of the indicator is a first value, transmitting the SRS to the base station, based on the MAC CE indicating the ID of the serving cell and the ID of the BWP comprised in the configuration information; and in case that the value of the indicator is a second value, transmitting the SRS to the base station, based on the configuration information.

According to an embodiment, in case that the value of the indicator is the second value, the ID of the serving cell and the ID of the BWP may be ignored in the MAC CE.

According to an embodiment, the MAC CE may include a semi-persistent/aperiodic (SP/AP) SRS TCI state indication MAC CE, or a serving cell set based SRS TCI state indication MAC CE.

According to an embodiment, the method may further include, in case that the value of the indicator is the first value, and the MAC CE includes an ID of a serving cell and an ID of a BWP which are different from the ID of the serving cell and the ID of the BWP comprised in the configuration information, transmitting the SRS to the base station, based on the ID of the serving cell and the ID of the BWP different from the ID of the serving cell and the ID of the BWP comprised in the configuration information.

According to an embodiment, a terminal in a wireless communication system may include a transceiver and a controller coupled with the transceiver. The controller may be configured to receive, from a base station, configuration information including information enabling a unified transmission configuration indication (TCI) state for a sounding reference signal (SRS), information indicating that the unified TCI state is applied for the SRS, and information on the identity (ID) of a serving cell and the ID of a bandwidth part (BWP) which are referenced to apply the unified TCI state; receive, from the base station, a medium access control (MAC) control element (CE) for indicating a TCI state of the SRS, the MAC CE including a one-bit indicator; in case that the value of the indicator is a first value, transmit the SRS to the base station, based on the MAC CE indicating the ID of the serving cell and the ID of the BWP comprised in the configuration information; and in case that the value of the indicator is a second value, transmit the SRS to the base station, based on the configuration information.

According to an embodiment, in case that the value of the indicator is the second value, the ID of the serving cell and the ID of the BWP may be ignored in the MAC CE.

According to an embodiment, the MAC CE may include a semi-persistent/aperiodic (SP/AP) SRS TCI state indication MAC CE, or a serving cell set based SRS TCI state indication MAC CE.

According to an embodiment, in case that the value of the indicator is the first value, and the MAC CE includes an ID of a serving cell and an ID of a BWP which are different from the ID of the serving cell and the ID of the BWP comprised in the configuration information, the controller may be configured to transmit the SRS to the base station, based on the ID of the serving cell and the ID of the BWP which are different from the ID of the serving cell and the ID of the BWP comprised in the configuration information.

According to an embodiment, a method performed by a base station in a wireless communication system may include transmitting, to a terminal, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; transmitting, to the terminal, a medium access control (MAC) control element (CE) for indicating a TCI state of the SRS, the MAC CE including a bit indicator; in case that a value of the indicator is a first value, receiving the SRS from the terminal, based on the MAC CE indicating the ID of the serving cell and the ID of the BWP included in the configuration information; and in case that the value of the indicator is a second value, receiving the SRS from the terminal, based on the configuration information.

According to an embodiment, in case that the value of the indicator is the second value, the ID of the serving cell and the ID of the BWP may be ignored in the MAC CE.

According to an embodiment, the MAC CE may include a semi-persistent/aperiodic (SP/AP) SRS TCI state indication MAC CE, or a serving cell set based SRS TCI state indication MAC CE.

According to an embodiment, the method may further include, in case that the value of the indicator is the first value, and the MAC CE includes an ID of a serving cell and an ID of a BWP which are different from the ID of the serving cell and the ID of the BWP comprised in the configuration information, receiving the SRS from the terminal, based on the ID of the serving cell and the ID of the BWP which are different from the ID of the serving cell and the ID of the BWP comprised in the configuration information.

According to an embodiment, a base station in a wireless communication system may include a transceiver and a controller coupled with the transceiver. The controller may be configured to transmit, to a terminal, configuration information including information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state; transmit, to the terminal, a medium access control (MAC) control element (CE) for indicating a TCI state of the SRS, the MAC CE including a bit indicator; in case that a value of the indicator is a first value, receive the SRS from the terminal, based on the MAC CE indicating the ID of the serving cell and the ID of the BWP comprised in the configuration information; and in case that the value of the indicator is a second value, receive the SRS from the terminal, based on the configuration information.

According to an embodiment, in case that the value of the indicator is the second value, the ID of the serving cell and the ID of the BWP may be ignored in the MAC CE.

According to an embodiment, the MAC CE may include a semi-persistent/aperiodic (SP/AP) SRS TCI state indication MAC CE, or a serving cell set based SRS TCI state indication MAC CE.

FIG. 1H illustrates operations of a gNB according to an embodiment of the disclosure.

Referring to FIG. 1H, in operation 1h-05 according to an embodiment, the gNB may establish an RRC connected state with a UE. In operation 1h-10, the gNB may enquire the UE about UE capability and may receive the UE's capability information. For example, the gNB may first transfer a UE capability enquiry message to the UE, thereby performing a UE capability enquiry after filtering UE capabilities needed by the gNB.

According to an embodiment, the UE may transfer, to the gNB, a UE capability information message including UE capability supported by the UE within the range of the gNB's enquiry.

According to an embodiment, if the gNB has identified or determined the UE's capability, the gNB may transfer an RRC message or RRC reconfiguration message including configuration information in the gNB to the UE in operation 1h-15. For example, the RRC message provides or includes RRC configurations needed by the UE, and a TCI state configuration (for example, unified TCI state configuration) and/or SRS transmission-related configuration and the like may be provided, included, or given. For example, in the RRC configuration, serving cell set information (simultaneousSpatial-UpdatedList1, simultaneousSpatial-UpdatedList2) to which the same beam update regarding SRS transmission may be applied may be provided together. If a unified TCI state-based beam update is indicated with regard to an SRS resource existing in a list (serving cell set based SRS TCI state indication MAC CE), the same beam update operation may be applied to SRS resources of all serving cells belonging to the group. In the SRS transmission configuration, a configuration regarding a periodic SRS transmission resource (for example, SRS transmission resources, transmission period, and/or offset and the like), a configuration regarding semi-persistent SRS transmission (for example, SRS transmission resources, transmission period, and/or offset and the like), and/or a configuration regarding aperiodic SRS transmission (for example, SRS transmission resources and the like) may be provided.

According to an embodiment, the gNB may indicate activation regarding periodic SRS transmission, semi-persistent SRS transmission, and/or aperiodic SRS transmission according to the SRS transmission mode which the gNB wants to configure for the UE. For example, the gNB may transmit a MAC CE related to SRS activation according to the SRS transmission mode in operation 1d-20. In the case of periodic SRS transmission, an RRC configuration may be transferred in operation 1h-15, thereby instantly activating SRS transmission by the UE. With regard to semi-persistent SRS transmission and aperiodic SRS transmission, an SP/AP SRS TCI state indication MAC CE may be transferred in operation 1h-20, thereby indicating activation. In the MAC CE, beam information used when a semi-persistent SRS resource and an aperiodic SRS resource are transmitted may be indicated together. In the MAC CE, a TCI state regarding a unified TCI state may be indicated by beam information.

According to an embodiment, the gNB may receive an SRS transmitted by the UE according to the gNB's instruction in operation 1h-25, and may measure the UE's uplink channel in operation 1h-30 by receiving the SRS resource transmitted by the UE. The measured channel may be applied to subsequent link prediction and data transmission and/or reception with the UE.

FIG. 1I is a block diagram illustrating the structure of a UE according to an embodiment of the disclosure.

Referring to FIG. 1I, the UE according to an embodiment may include a radio frequency (RF) processor 1i-10, a baseband processor 1i-20, a storage unit 1i-30, and a controller 1i-40.

According to an embodiment, the RF processor 1i-10 may perform functions for transmitting/receiving signals through a radio channel, such as signal band conversion and amplification. That is, the RF processor 1i-10 may up-convert a baseband signal provided from the baseband processor 1i-20 to an RF band signal, may transmit the same through an antenna, and may down-convert an RF band signal received through the antenna to a baseband signal. For example, the RF processor 1i-10 may include a transmission filter, a reception filter, an amplifier, a mixer, an oscillator, a digital-to-analog converter (DAC), an analog-to-digital converter (ADC), and the like. Obviously, above-described components of the RF processor 1i-10 are only an example, and the RF processor 1i-10 may further include other components, or some of the above-described components may be omitted. Although only one antenna is illustrated in FIG. 1i, the UE may include multiple antennas. In addition, the RF processor 1i-10 may include multiple RF chains. Furthermore, the RF processor 1i-10 may perform beamforming. For the beamforming, the RF processor 1i-10 may adjust the phase and magnitude of signals transmitted/received through multiple antennas or antenna elements, respectively. In addition, the RF processor may perform MIMO, and may receive multiple layers when performing a MIMO operation.

The baseband processor 1i-20 may perform functions of conversion between baseband signals and bitstrings according to the system's physical layer specifications. For example, during data transmission, the baseband processor 1i-20 may encode and modulate a transmitted bitstring to generate complex symbols. In addition, during data reception, the baseband processor 1i-20 may demodulate and decode a baseband signal provided from the RF processor 1i-10 to restore a received bitstring. For example, when following the orthogonal frequency division multiplexing (OFDM) scheme, during data transmission, the baseband processor 1i-20 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1i-20 may split a baseband signal provided from the RF processor 1i-10 at the OFDM symbol level, may restore signals mapped to subcarriers through a fast Fourier transform (FFT) operation, and may restore a received bitstring through demodulation and decoding.

The baseband processor 1i-20 and the RF processor 1i-10 may transmit and receive signals as described above. Therefore, the baseband processor 1i-20 and the RF processor 1i-10 may be referred to as a transmitter, a receiver, a transceiver, or a communication unit. Furthermore, at least one of the baseband processor 1i-20 and the RF processor 1i-10 may include multiple communication modules to support multiple different radio access technologies. In addition, at least one of the baseband processor 1i-20 and the RF processor 1i-10 may include different communication modules to process signals in different frequency bands. For example, the different radio access technologies may include wireless LANs (for example, IEEE 802.11), cellular networks (for example, LTE), and the like. In addition, the different frequency bands may include a super high frequency (SHF) (for example, 2.NRHz, NRhz) bands and millimeter wave (for example, 60GHz) bands. The UE may transmit and/or receive a signal with the gNB by using the baseband processor 1i-20 and the RF processor 1i-10, and the signal may include control information and data.

The storage unit 1i-30 may store data such as basic programs for operations of the UE, application programs, and configuration information. Particularly, the storage unit 1i-30 may store information regarding a second access node configured to perform wireless communication by using a second radio access technology. In addition, the storage unit 1i-30 may provide the stored data at the request of the controller 1i-40.

The controller 1i-40 may control overall operations of the UE. For example, the controller 1i-40 may transmit/receive signals through the baseband processor 1i-20 and the RF processor 1i-10. In addition, the controller 1i-40 may record and read data in the storage unit 1i-40. To this end, the controller 1i-40 may include at least one processor. For example, the controller 1i-40 may include a communication processor (CP) configured to perform control for communication, and an application processor (AP) configured to control upper layers such as application programs. In addition, at least one component in the UE may be implemented as a single chip.

FIG. 1J is a block diagram illustrating the configuration of an NR gNB according to an embodiment of the disclosure.

As illustrated in FIG. 1J, the gNB may include an RF processor 1j-10, a baseband processor 1j-20, a backhaul communication unit 1j-30, a storage unit 1j-40, and/or a controller 1j-50. Components included in the gNB are not limited to the above-described components, and the gNB may further include additional components, or some of the components illustrated in FIG. 1J may be omitted.

According to an embodiment, the RF processor 1j-10 may perform functions for transmitting/receiving signals through a radio channel, such as signal band conversion and amplification. That is, the RF processor 1j-10 may up-convert a baseband signal provided from the baseband processor 1j-20 to an RF band signal, may transmit the same through an antenna, and may down-convert an RF band signal received through the antenna to a baseband signal. For example, the RF processor 1j-10 may include a transmission filter, a reception filter, an amplifier, a mixer, an oscillator, a DAC, and an ADC. Although only one antenna is illustrated in FIG. 1J, the first access node or gNB may include multiple antennas. In addition, the RF processor 1j-10 may include multiple RF chains. Furthermore, the RF processor 1j-10 may perform beamforming. For the beamforming, the RF processor 1j-10 may adjust the phase and magnitude of signals transmitted/received through multiple antennas or antenna elements, respectively. The RF processor may transmit one or more layers to perform a downward MIMO operation.

The baseband processor 1j-20 may perform functions of conversion between baseband signals and bitstrings according to the physical layer specifications of first radio access technology. For example, during data transmission, the baseband processor 1j-20 may encode and modulate a transmitted bitstring to generate complex symbols. In addition, during data reception, the baseband processor 1j-20 may demodulate and decode a baseband signal provided from the RF processor 1j-10 to restore a received bitstring. For example, when following the OFDM scheme, during data transmission, the baseband processor 1j-20 may encode and modulate a transmitted bitstring to generate complex symbols, may map the complex symbols to subcarriers, and may configure OFDM symbols through an IFFT operation and CP insertion. In addition, during data reception, the baseband processor 1j-20 may split a baseband signal provided from the RF processor 1j-10 at the OFDM symbol level, may restore signals mapped to subcarriers through FFT operation, and may restore a received bitstring through demodulation and decoding. The baseband processor 1j-20 and the RF processor 1j-10 transmit and receive signals as described above. Therefore, the baseband processor 1j-20 and the RF processor 1j-10 may be referred to as a transmitter, a receiver, a transceiver, a communication unit, or a wireless communication unit. The gNB may transmit and/or receive a signal with the UE by using the baseband processor 1j-20 and the RF processor 1j-10, and the signal may include control information and data.

The backhaul communication unit 1j-30 may provide an interface for communicating with other nodes in the network. That is, the backhaul communication unit 1j-30 may convert bitstrings transmitted from the main gNB to other nodes (for example, auxiliary gNB, core network) to physical signals, and may convert physical signals received from the other nodes to bitstrings. The backhaul communication unit 1j-30 may be included in the communication unit.

The storage unit 1j-40 may store data such as basic programs for operations of the gNB, application programs, and configuration information. Particularly, the storage unit 1j-40 may store information regarding a bearer allocated to a connected UE, a measurement result reported from the connected UE, and the like. In addition, the storage unit 1j-40 may store information serving as a reference to determine whether to provide multi-connection to a UE or to suspend the same. In addition, the storage unit 1j-40 may provide the stored data at the request of the controller 1j-50. The storage unit 1j-40 may be configured by storage media such as a ROM, a RAM, a hard disk, a CD-ROM, and a DVD, or a combination of storage media. In addition, the storage unit 1j-40 may be configured by multiple memories.

The controller 1j-50 may control overall operations of the gNB. For example, the controller 1j-50 may transmit/receive signals through the baseband processor 1j-20 and the RF processor 1j-10 or through the backhaul communication unit 1j-30. In addition, the controller 1j-50 may record and read data in the storage unit 1j-40. To this end, the controller 1j-50 may include at least one processor. In addition, at least one component of the gNB may be implemented as a single chip.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims as described below and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on the 5G or NR system, other variants based on the technical idea of the embodiments may also be implemented in other communication systems such as LTE, LTE-A, or LTE-A-Pro systems.

## Claims

1. A method performed by a terminal in a wireless communication system, the method comprising:
receiving, from a base station, configuration information comprising information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state;
receiving, from the base station, a medium access control (MAC) control element (CE) for indicating a TCI state of the SRS, the MAC CE comprising a one-bit indicator;
in case that a value of the indicator is a first value, transmitting the SRS to the base station, based on the MAC CE indicating the ID of the serving cell and the ID of the BWP comprised in the configuration information; and
in case that the value of the indicator is a second value, transmitting the SRS to the base station, based on the configuration information.

2. The method of claim 1, wherein, in case that the value of the indicator is the second value, the ID of the serving cell and the ID of the BWP are ignored in the MAC CE.

3. The method of claim 1, wherein the MAC CE comprises a semi-persistent/aperiodic (SP/AP) SRS TCI state indication MAC CE, or a serving cell set based SRS TCI state indication MAC CE.

4. The method of claim 1, further comprising:
in case that the value of the indicator is the first value, and the MAC CE comprises an ID of a serving cell and an ID of a BWP which are different from the ID of the serving cell and the ID of the BWP comprised in the configuration information, transmitting the SRS to the base station, based on the ID of the serving cell and the ID of the BWP which are different from the ID of the serving cell and the ID of the BWP comprised in the configuration information.

5. A terminal in a wireless communication system, the terminal comprising:
a transceiver; and
a controller coupled with the transceiver,
wherein the controller is configured to:
receive, from a base station, configuration information comprising information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state;
receive, from the base station, a medium access control (MAC) control element (CE) for indicating a TCI state of the SRS, the MAC CE comprising a one-bit indicator;
in case that a value of the indicator is a first value, transmit the SRS to the base station, based on the MAC CE indicating the ID of the serving cell and the ID of the BWP comprised in the configuration information; and
in case that the value of the indicator is a second value, transmit the SRS to the base station, based on the configuration information.

6. The terminal of claim 5, wherein, in case that the value of the indicator is the second value, the ID of the serving cell and the ID of the BWP are ignored in the MAC CE.

7. The terminal of claim 5, wherein the MAC CE comprises a semi-persistent/aperiodic (SP/AP) SRS TCI state indication MAC CE, or a serving cell set based SRS TCI state indication MAC CE.

8. The terminal of claim 5, wherein in case that the value of the indicator is the first value, and the MAC CE comprises an ID of a serving cell and an ID of a BWP which are different from the ID of the serving cell and the ID of the BWP comprised in the configuration information, the controller is configured to transmit the SRS to the base station, based on the ID of the serving cell and the ID of the BWP which are different from the ID of the serving cell and the ID of the BWP comprised in the configuration information.

9. A method performed by a base station in a wireless communication system, the method comprising:
transmitting, to a terminal, configuration information comprising information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state;
transmitting, to the terminal, a medium access control (MAC) control element (CE) for indicating a TCI state of the SRS, the MAC CE comprising a bit indicator;
in case that a value of the indicator is a first value, receiving the SRS from the terminal, based on the MAC CE indicating the ID of the serving cell and the ID of the BWP comprised in the configuration information; and
in case that the value of the indicator is a second value, receiving the SRS from the terminal, based on the configuration information.

10. The method of claim 9, wherein, in case that the value of the indicator is the second value, the ID of the serving cell and the ID of the BWP are ignored in the MAC CE.

11. The method of claim 9, wherein the MAC CE comprises a semi-persistent/aperiodic (SP/AP) SRS TCI state indication MAC CE, or a serving cell set based SRS TCI state indication MAC CE.

12. The method of claim 9, further comprising:
in case that the value of the indicator is the first value, and the MAC CE comprises an ID of a serving cell and an ID of a BWP which are different from the ID of the serving cell and the ID of the BWP comprised in the configuration information, receiving the SRS from the terminal, based on the ID of the serving cell and the ID of the BWP which are different from the ID of the serving cell and the ID of the BWP comprised in the configuration information.

13. A base station in a wireless communication system, the base station comprising:
a transceiver; and
a controller coupled with the transceiver,
wherein the controller is configured to:
transmit, to a terminal, configuration information comprising information enabling a unified transmission configuration indication (TCI) state for a sounding reference signal (SRS), information indicating that the unified TCI state is applied for the SRS, and information on an identity (ID) of a serving cell and an ID of a bandwidth part (BWP) which are referenced to apply the unified TCI state;
transmit, to the terminal, a medium access control (MAC) control element (CE) for indicating a TCI state of the SRS, the MAC CE comprising a bit indicator;
in case that a value of the indicator is a first value, receive the SRS from the terminal, based on the MAC CE indicating the ID of the serving cell and the ID of the BWP comprised in the configuration information; and
in case that the value of the indicator is a second value, receive the SRS from the terminal, based on the configuration information.

14. The base station of claim 13, wherein, in case that the value of the indicator is the second value, the ID of the serving cell and the ID of the BWP are ignored in the MAC CE.

15. The base station of claim 13, wherein the MAC CE comprises a semi-persistent/aperiodic (SP/AP) SRS TCI state indication MAC CE, or a serving cell set based SRS TCI state indication MAC CE.
